# EUROPÄISCHE PATENTSCHRIFT

(11) **EP 2 388 495 B1**
(45) Veröffentlichungstag und Bekanntmachung des Hinweises auf die Patenterteilung: **19.12.2018**
(21) Anmeldenummer: 11003464.2
(22) Anmeldetag: 28.04.2011
(51) Int. Cl.: F16F 13/10

(54) **Trennwand für ein Hydrolager**
Partition wall for a hydraulic support
Paroi de séparation pour une couche hydraulique

(30) Priorität: 21.05.2010 DE 102010021193
(43) Veröffentlichungstag der Anmeldung: 23.11.2011
(73) Patentinhaber: Vibracoustic GmbH, 64293 Darmstadt (DE)
(72) Erfinder: Scheib, Patrick, 69502 Hemsbach (DE); Farrenkopf, Peter, 68519 Viernheim (DE); Stein, Kurt, 69509 Mörlenbach (DE); Beckmann, Wolfgang, 64289 Darmstadt (DE)
(74) Vertreter: Flügel Preissner Schober Seidel

(56) Entgegenhaltungen:
- EP-A1- 2 196 344
- DE-A1- 10 213 996
- JP-A- 2010 007 837
- US-A1- 2006 022 110

## Beschreibung

Hydraulisch dämpfende Lager für Getriebe und Motoren sind weit verbreitet. Der Grundaufbau solcher Hydrolager besteht aus einer Tragfeder aus einem Elastomer, die zwischen einem Traglager und einem Auflager angebracht ist. Die hydraulische Flüssigkeit wird in zwei Kammern untergebracht und zwar in einer Arbeitskammer und einer Ausgleichskammer, die durch eine Trennwand aus zwei starren Düsenscheiben mit dazwischen eingefügter biegeweicher elastischer Membran voneinander getrennt sind. Die hydraulische Verbindung der Kammern wird durch einen Dämpfungskanal hergestellt, der eine dämpfende Wirkung hat. Schwingungen mit großer Amplitude und geringer Frequenz werden durch den Kanal gedämpft. Die zwischen den Düsenscheiben eingesetzte Membran dient ihrerseits zur Isolierung hochfrequenter kleinamplitudiger Schwingungen. Dabei nimmt die Membran die eingeleiteten Schwingungen geringer Amplitude so auf, dass der Dämpfungskanal bei diesen Amplituden und Frequenzen nicht wirksam wird. Hierfür kann die Membran entkoppelt mit Spiel axial beweglich zwischen den Düsenscheiben angeordnet werden oder auch an ihren Rändern eingespannt werden. Bei der ersten Ausführungsform ist die Abdichtung der Membran an ihren Rändern problematisch. Auch ist eine starke Abhängigkeit der Funktionswerte wie dynamische Steifigkeit und Verlustwinkel vom vorhandenen Membranspiel zwischen der Membrane und der Düsenplatten vorhanden. Die Toleranzen liegen hier im 1/100 Millimeterbereich. Diese Toleranzen erfordern eine hohe Fertigungsgenauigkeit, die mit großen Kosten verbunden ist. Darüber hinaus ist es sehr schwer diese Toleranzen wirtschaftlich in Großserien zu realisieren. Dieses führt insbesondere zu Problemen wenn aus Kostengründen die Düsenscheiben aus einem Kunststoff hergestellt werden sollen.

In US 2006/0022110 A1 ist eine Trennwand für ein Hydrolager offenbart, die zwei Düsenscheiben und eine zwischen den Düsenscheiben fest eingeklemmte Membran aufweist. Eine Bewegung der Membran ist nur im Bereich der Öffnungen der Düsenscheiben möglich.

Ferner geht aus DE 102 13 996 A1 eine Trennwand für ein Hydrolager hervor, die aus zwei Düsenscheiben gebildet ist. Zwischen den Düsenscheiben ist eine Membran angeordnet, die an Ihren Rändern zwischen den Düsenscheiben geklemmt ist. Außerhalb dieser Klemmbereiche ist die Membran beweglich zwischen den beiden Düsenscheiben angeordnet.

Aus JP 2010 007837 A geht eine Trennwand für ein Hydrolager hervor, die eine zwischen zwei Düsenscheiben geklemmte Membran aufweist. Neben diesen geklemmten Bereichen weist die Membran Abschnitte mit einer geringeren Wandstärke auf, die nicht geklemmt sind. Diese Abschnitte stehen mit der Ausgleichskammer über Kanäle in Verbindung, die in die Trennwand eingebracht sind. Bei einem Überdruck in der Ausgleichskammer wird die Membran mit dem Fluid aus der Ausgleichskammer beaufschlagt, wobei sich die Membran nach oben wölbt und eine zusätzliche Kammer freigibt.

### Darstellung der Erfindung

Der Erfindung liegt die Aufgabe zu Grunde, eine Möglichkeit zu finden, mit der eine optimale Isolierung der eingeleiteten Schwingungen mit einer kleinen Amplitude kostengünstig erreichbar ist, wobei gleichzeitig die Toleranzwerte der Funktionswerte der dynamischen Steifigkeit und des Verlustwinkels nicht überschritten werden. Die Lösung soll kostengünstig sein und in einem weiten Anwendungsbereich eingesetzt werden können.

Die gestellte Aufgabe wird mit den Merkmalen des Anspruchs 1 gelöst, dessen Oberbegriff in der US2006/0022110 A1 offenbart ist. Die Unteransprüche 2 bis 15 stellen vorteilhafte Weiterbildungen des Erfindungsgedankens dar.

In durchgeführten Versuchen zeigte sich, dass eine Aufteilung der Membran in geklemmte und entkoppelte Bereiche überraschenderweise hohe Fertigungstoleranzen zulässt, wobei gleichzeitig die Toleranzen bei der dynamischen Steifigkeit und dem Verlustwinkel eingehalten sind. Die Trennwand wird mit Düsenscheiben versehen, welche so ausgestaltet sind, dass die Membran in zueinander benachbarten Bereichen einmal geklemmt und einmal entkoppelt ist. Die geklemmten beziehungsweise die entkoppelten Bereiche werden durch Kreissektoren an mindestens einer der Düsenscheiben dargestellt. Die Entkoppelung wird dabei durch Vertiefungen in der Wand wenigstens einer der Düsenscheiben gebildet. Diese Vertiefungen sind auf der Innenseite der Düsenscheibe beziehungsweise der Düsenscheiben angebracht. Dabei können die Düsenscheiben auch aus Kunststoff bestehen.

Bevorzugt werden die entkoppelten Bereiche an zwei sich radial gegenüberliegenden Kreissektoren der Trennwand durch die genannten Vertiefungen in wenigstens einer Düsenscheibe hergestellt. Diese Kreissektoren mit den Vertiefungen haben bevorzugt jeweils einen Winkel von 60 Grad.

Die Düsen an den Düsenscheiben können sehr unterschiedliche Formen haben, bevorzugt sind sie jedoch kreisförmig angeordnet und zueinander fluchtend ausgerichtet. Die Ausbildung des Dämpfungskanals erfolgt in bekannterweise, indem der Kanal im Außenrand der Trennwand angeordnet wird. Die in der betreffenden Düsenscheibe angebrachten Abflachungen werden durch Stege vom Dämpfungskanal getrennt.

Die neue Trennwand eignet sich auch sehr gut für die Verwendung in einem schaltbaren Hydrolager, bei dem in der Mitte der Trennwand eine verschließbare Öffnung vorhanden ist. Die Düsenscheiben sind hier ringförmig ausgebildet ebenso die dazwischen eingesetzte Membrane.

Die erfindungsgemäße Trennwand kann in allen üblichen Hydrolagern eingesetzt werden. Dabei können die Düsenscheiben aus verschiedenen Materialien bestehen, was auch auf die Membran zutrifft. Bevorzugt wird die Membran jedoch biegeweich ausgestaltet. Ganz allgemein ist eine Klemmung der Membran im Verhältnis 1:5 bis 1:7 vorgesehen. Die Entkopplung der Membran auch als Freigang bezeichnet, wird im Verhältnis 1:12 bis 1:3 vorgenommen.

### Kurzbeschreibung der Zeichnung

Anhand eines in der Zeichnung dargestellten Ausführungsbeispiels wird die Erfindung nachstehend näher erläutert:
Es zeigt
- Figur 1: einen Schnitt durch ein schaltbares Hydrolager mit Trennwand,
- Figur 2: eine Draufsicht auf die Innenseite der oberen Düsenscheibe,
- Figur 3: eine Draufsicht auf die Innenseite der unteren Düsenscheibe,
- Figur 4: einen Schnitt durch die Trennwand gemäß der Linie A-A der Figur 2,
- Figuren 5 und 6: vergrößerte Schnitte der linken und der rechten Seite nach der Figur 4 und
- die Figuren 7 und 8: Diagramme mit dem Verlauf der dynamischen Steifigkeit im vorgegebenen Frequenzbereich.

### Ausführung der Erfindung

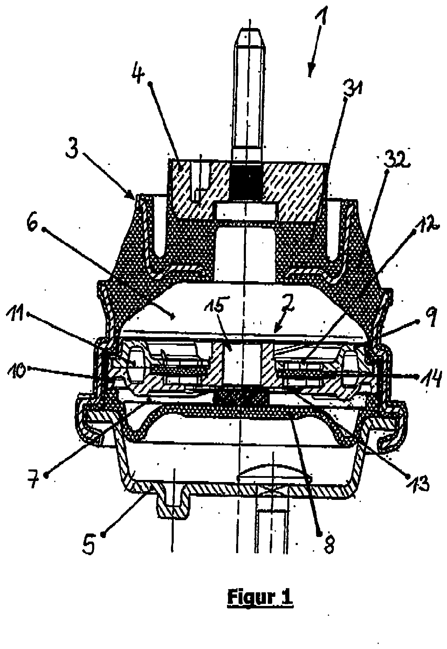

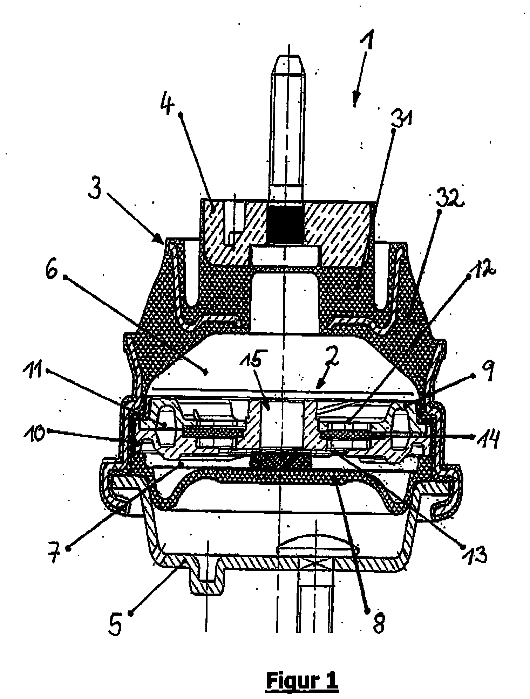

In dem nachfolgenden Beispiel wird in der Figur 1 lediglich der prinzipielle Aufbau eines schaltbaren Hydrolagers gezeigt. Zum generellen Aufbau eines Hydrolagers mit Trennwand wird auf die EP 0040290 A2 und auch die DE 41 41 332 C2 verwiesen. Die erst genannte Schrift zeigt ein entkoppeltes Hydrolager während die zweit genannte Schrift ein schaltbares Hydrolager zum Inhalt hat. Der grundsätzliche Aufbau eines solchen Hydrolagers enthält eine Tragfeder aus einem Elastomer, die zwischen einem Traglager und einem Auflager angeordnet ist. Zwischen Tragfeder und Trennwand befindet sich die Arbeitskammer. Unterhalb der Trennwand ist die Ausgleichskammer vorhanden, welche durch einen Rollbalg abgeschlossen wird. Die Trennwand besteht aus zwei starren Düsenscheiben, zwischen die eine elastische Membran eingelegt ist. Die hydraulischen Verbindung der Kammern erfolgt über einen Dämpfungskanal der in der Trennwand angeordnet ist. Die Membran ist entweder frei mit Spiel axial beweglich zwischen den Düsenplatten angeordnet oder an ihren Rändern von den Düsenplatten verklemmt. Die Wirkungsweise der Trennwand mit der Membran wird mit der Wirkungsweise des Dämpfungskanals so abgestimmt, dass bei Schwingungen mit geringer Amplitude eine hydraulische Entkopplung des Dämpfungskanals erfolgt, Hierfür sind jeweils sehr genaue Abstimmungen zwischen der Membranbewegung und dem Durchmesser beziehungsweise Länge des Dämpfungskanals erforderlich. Hierfür sind außerordentlich hohe Fertigungstoleranzen einzuhalten.

Die Trennwand nach der Erfindung hat einen Aufbau, welcher das Fertigungstoleranzfeld vergrößert ohne dass die geforderten Funktionstoleranzen beeinträchtigt werden. Dies wird dadurch erreicht, dass die zwischen die Düsenscheiben eingesetzte Membran in vorgegebenen Bereichen geklemmt und in dazu benachbarten Bereichen entklemmt ist. Dieses wird bei dem gezeigten Ausführungsbeispiel dadurch erreicht, dass die Düsenscheiben mit klemmenden und mit nicht-klemmenden Bereichen mit Spiel versehen sind.

In der Figur 1 ist ein schaltbares Hydrolager schematisch dargestellt, dass mit der Trennwand 2 versehen ist. Das Hydrolager 1 hat die Tragfeder 3 die im vorliegenden Beispiel aus einer Innenfeder und einer Aussenfeder 31 und 32 besteht. Die Tragfeder 3 ist rotationassymetrisch angeordnet und besteht aus einem Elastomer. Oberhalb der Tragfeder 3 befindet sich das Traglager 4 und am unteren Ende das Auflager 5. Zwischen der Tragfeder 3 und der Trennwand 2 befindet sich die Arbeitskammer 6. Unterhalb der Trennwand 2 ist die Ausgleichskammer 7. Die Ausgleichskammer 7 wird von dem Rollbalg 8 abgeschlossen. Die Trennwand 2 besteht aus der oberen Düsenscheibe 9 und der unteren Düsenscheibe 10. Im äußeren Rand der Trennwand 2 ist der Dämpfungskanal 11 untergebracht. Zwischen den Düsenscheiben 9 und 10 befindet sich im Bereich der Düsen 12 und 13 die Membrane 14. In der Mitte der Trennwand 2 ist die Öffnung 15 vorhanden, die je nach Betriebszustand geöffnet oder geschlossen ist. Für den Schließvorgang sind unterschiedliche Einrichtungen angewendet, die im vorliegenden Beispiel nicht näher gezeichnet sind. Die Öffnung 15 funktioniert im Leerlauf als zusätzlicher Tilgerkanal, der auf die kritische Leerlauffrequenz abgestimmt ist. Gemäß der Erfindung wird die Membran 14 zwischen den Düsenscheiben 9, 10 in vorgegebenen Bereichen geklemmt und in zu den vorgegebenen geklemmten Bereichen benachbarten Bereichen mit axialem Spiel angeordnet. Der in der Figur gezeigte Schnitt durch das Hydrolager 1 ist so gelegt, dass die Membran 14 auf der rechten Seite der Figur geklemmt ist, während auf der linken Seite der Figur die Membran 14 in einem Bereich mit axialem Spiel liegt.

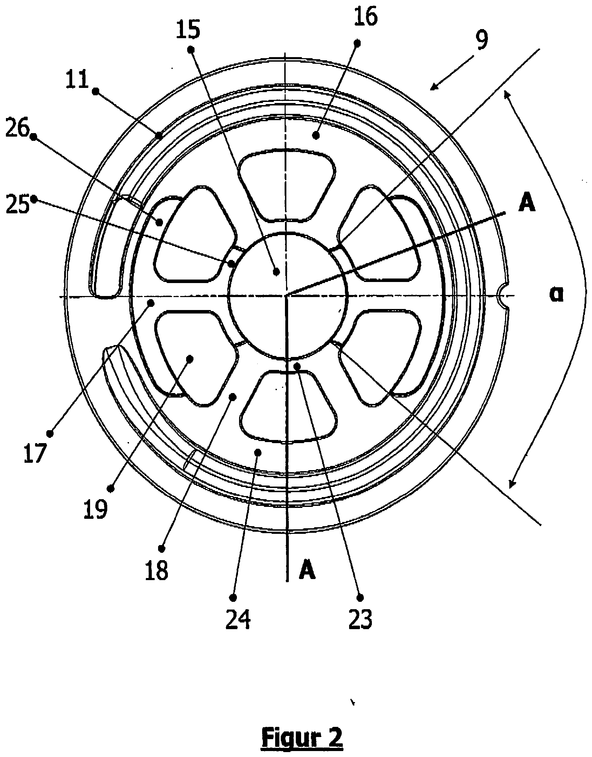

In der Figur 2 ist die Innenansicht der oberen Düsenscheibe 9 wiedergegeben. Die Linie A-A in der Figur 2 gibt den Schnitt an, wie er in der Figur 1 gezeigt ist. Die geklemmten Bereiche 16 und die mit Spiel versehenen Bereiche 17 sind gegenüberliegend angeordnet. Im vorliegenden Ausführungsbeispiel sind zwei geklemmte Bereiche 16 und zwei mit Spiel versehene Bereiche 17 vorgesehen. Die Bereiche 16 und 17 sind als Kreissektoren ausgebildet. Dabei umfassen die geklemmten Bereiche 16 mindestens den äußeren Rand der Membran 14 und die zwischen dem Randsektor und der Öffnung 15 liegenden Flächen 18. Die Bereiche 17 mit Spiel, werden durch Ausnehmungen in der Form von Abflachungen auf der Innenseite in der Wand der Düsenscheibe 9 gebildet.

Diese Düsenscheibe 9 ist zur Arbeitskammer 6 gerichtet. Im Ausführungsbeispiel beträgt der Sektorwinkel α für die Bereiche 17 mit Spiel 80°. Auf dem Umfang der Trennwand 2 sind gleichmäßig verteilt auf jeder Düsenscheibe 9, 10, sechs Düsen 19 angebracht. Die Anzahl der Düsen 19 und auch die Größe der einzelnen Bereiche 16, 17 kann unterschiedlich sein und wird von den gewollten Frequenzen vorbestimmt.

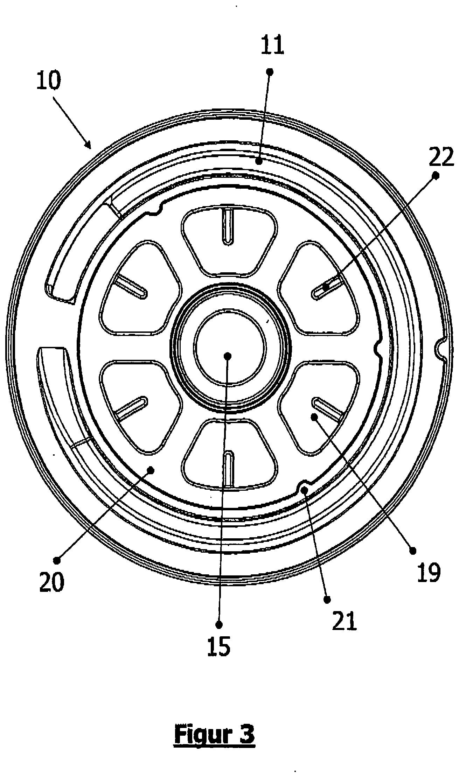

Die Figur 3 zeigt eine Draufsicht auf die Innenseite der unteren Düsenscheibe 10. Die Düsenscheibe 10 ist mit in einer Ebene liegenden Anlagefläche 20 versehen. Auf dieser Anlagefläche 20 liegt die Membran 14 auf. Die Membran 14 reicht dabei mit ihrem Außenrand bis an den Steg 21, welcher den Kanal 11 von der Membran 14 trennt. Die Düsen 19 liegen fluchtend zu den Düsen 19 aus der oberen Düsenscheibe 9. Mit Abstand zur Düsenöffnung 19 sind unterhalb der Düsenöffnung 19 radiale Wegbegrenzer 22 angebracht. Diese Wegbegrenzer 22 verhindern ein Herausschlüpfen und eventuelle Beschädigungen der Membran 14. Des weiteren ermöglichen die Wegbegrenzer 22 ein Einstellen des Verlustwinkels und haben einen positiven Einfluss auf mögliche Start-Stop-Geräusche.

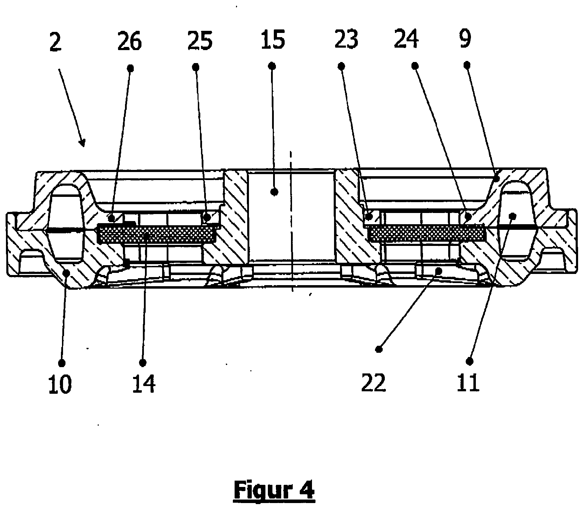

In der Figur 4 ist die Trennwand 2 nach Figur 1 für sich genommen dargestellt. Auf der rechten Seite der Figur ist die Klemmung der Membrane 14 durch die Abschnitte 23 und 24 der oberen Düsenscheibe 9, siehe hierzu auch Figur 2, sichtbar. Während die Abschnitte 25 und 26 im Bereich der Ausnehmungen ein begrenztes Spiel der Membran 14 zulassen.

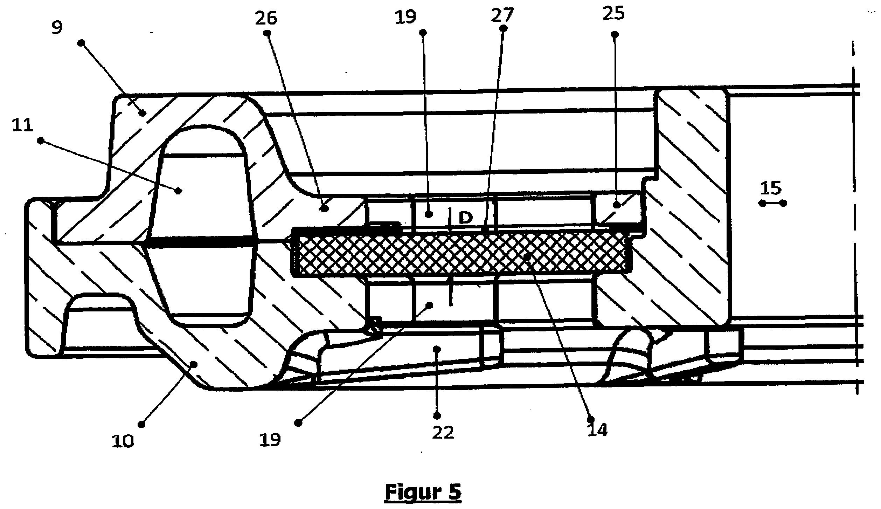

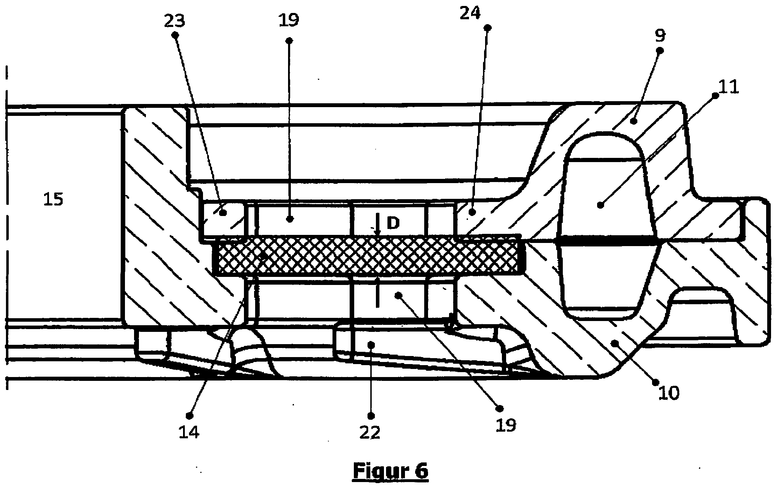

In den Figuren 5 und 6 sind die betreffenden Bereiche 16 und 17 vergrößert nochmals wiedergegeben. Das Spiel 27 für die Membran 14 ist hier vergrößert eingezeichnet um die axiale Beweglichkeit der Membran 14 zu veranschaulichen. Das gleiche gilt für die Klemmung durch die Abschnitte 23 und 24 der Membran 14. Ohne die Ausnehmungen auf der Innenseite der oberen Düsenscheibe 9, wäre die Membran 14 von den ebenen Flächen der Düsenscheiben 9 und 10 geklemmt. Es würde sich dann um eine geklemmte Membran handeln. Wenn die Ausnehmung in den Bereichen 17, die gesamte Innenfläche der Düsenscheibe 9 umfassen würden, würde es sich um eine entkoppelte Membran handeln. Durch die versenkten Flächen in den Bereichen 17 die eben ausgebildet sind, entsteht eine semi-gekoppelte Membran die überraschenderweise bei niedrigen Fertigungstoleranzen sehr gute Funktionstoleranzen ergibt.

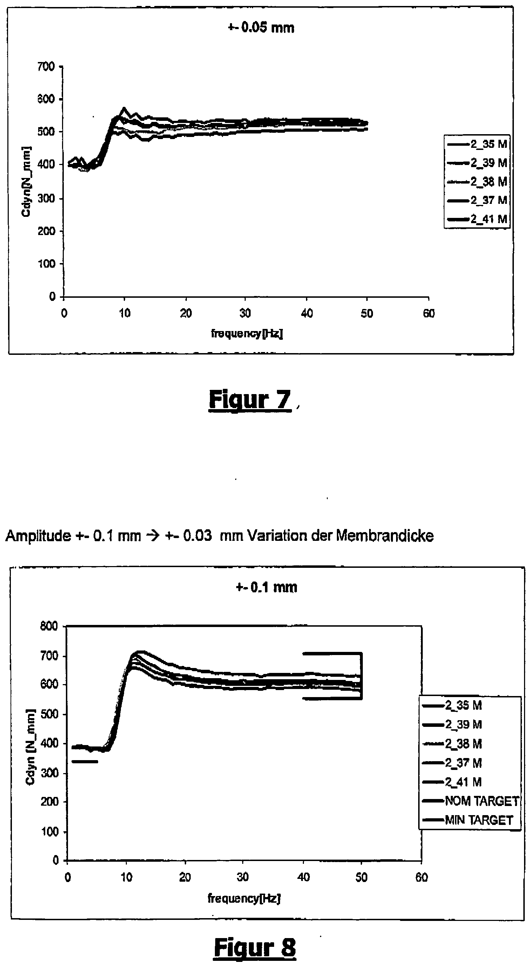

In den Figuren 7 und 8 sind Messergebnisse dargestellt, die aufzeigen, dass die dynamische Steifigkeit in dem vorgesehenen Frequenzbereich bei unterschiedlichen Dicken der Membran 14 in einem schmalen Zielbereich liegt. In der Figur 8 sind die Zielbereiche für das vorgegebene Minimum und den vorgegebenen nominellen Zielbereich gut erreicht, unabhängig von der Membrandicke die von 2,35 mm bis 2,41 mm verändert wurde. Dabei betrug die Amplitude ± 0,1 mm. Es konnte festgestellt werden, dass der Einfluss von Fertigungstoleranzen bei Düsenscheiben und Membran, sowie die Ebenheit der Düsenscheiben durch die Erfindung stark reduziert werden konnte. Es konnte auch festgestellt werden, dass die Klemmung der Membran 14 als auch das gewollte Spiel 27 der Membran 14 in größeren Bereichen zulässig ist, als das bei einer vollständig geklemmten beziehungsweise vollständig entkoppelten Membran der Fall ist. Die bevorzugten Bereiche der Verklemmung der Membran 14 in den geklemmten Bereichen 16 zur Membrandicke D ist in einem Verhältnis von 1:5 bis 1:7 möglich. Das Spiel 27 der Membran 14 in den Bereichen mit dem Spiel 27 zur Membrandicke D kann in einem Verhältnis von 1:12 bis 1:3 durchgeführt werden.

## Patentansprüche

1. Trennwand (2) für ein Hydrolager (1) mit einer Tragfeder (3) aus einem Elastomer zwischen einem Traglager (4) und einem Auflager (5), einer Arbeitskammer (6) und einer Ausgleichskammer (7), welche durch die Trennwand (2) aus zwei starren Düsenscheiben (9, 10) mit dazwischen eingefügter biegeweicher elastischer Membran (14) voneinander getrennt sind, wobei die Kammern (6, 7) hydraulisch über einen Dämpfungskanal (11) miteinander verbunden sind, wobei die Membran (14) zwischen den Düsenscheiben (9, 10) in vorgegebenen Bereichen (16) geklemmt und in zu den vorgegebenen geklemmten Bereichen (16) benachbarten Bereichen (17) mit axialem Spiel (27) angeordnet ist, und wobei die geklemmten Bereiche (16) sektormäßig mindestens den äußeren Rand und die zwischen dem Randsektor und der Mitte (15) der Trennwand (2) liegenden Flächen (18) der Düsenscheiben (9, 10) umfassen, **dadurch gekennzeichnet, dass** die Bereiche (17) mit Spiel (27) durch Ausnehmungen auf der Innenseite in der Wand wenigstens einer der Düsenscheiben (9) gebildet sind.

2. Trennwand für ein Hydrolager nach Anspruch 1, **dadurch gekennzeichnet, dass** die geklemmten Bereiche (16) und die mit Spiel (27) versehenen Bereiche (17) als Kreissektoren ausgestaltet sind.

3. Trennwand für ein Hydrolager nach Anspruch 1 oder 2, **dadurch gekennzeichnet, dass** die Ausnehmungen in der der Arbeitskammer (6) zugewandten Düsenscheibe (9) gebildet sind.

4. Trennwand für ein Hydrolager nach Anspruch 3, **dadurch gekennzeichnet, dass** zwei sich radial gegenüber liegende Bereiche (17) mit Spiel (27) vorhanden sind.

5. Trennwand für ein Hydrolager nach Anspruch 4, **dadurch gekennzeichnet, dass** die Bereiche (17) mit Spiel (27) einen Sektorwinkel (α) von 50° bis 90° umfassen.

6. Trennwand für ein Hydrolager nach einem der Ansprüche 1 bis 5, **dadurch gekennzeichnet, dass** die Klemmung der Membran (14) in den geklemmten Bereichen (16) zur Membrandicke (D) in einem Verhältnis von 1 zu 5 bis 1 zu 7 steht.

7. Trennwand für ein Hydrolager nach einem der Ansprüche 1 bis 6, **dadurch gekennzeichnet, dass** das Spiel (27) der Membran (14) in den Bereichen (17) mit Spiel (27) zur Membrandicke (D) in einem Verhältnis von 1 zu 12 bis 1 zu 3 steht.

8. Trennwand für ein Hydrolager nach einem der Ansprüche 1 bis 7, **dadurch gekennzeichnet, dass** die Düsen (19) in den Düsenscheiben (9, 10) fluchtend zueinander ausgerichtet sind.

9. Trennwand für ein Hydrolager nach einem der Ansprüche 1 bis 8, **dadurch gekennzeichnet, dass** der Dämpfungskanal (11) im äußeren Rand der Trennwand (2) angeordnet ist.

10. Trennwand für ein Hydrolager nach einem der Ansprüche 1 bis 9, **dadurch gekennzeichnet, dass** auf dem Umfang der Trennwand (2) gleichmäßig verteilt sechs Düsen (19) angebracht sind.

11. Trennwand für ein Hydrolager nach Anspruch 10, **dadurch gekennzeichnet, dass** die der Ausgleichskammer (7) zugewandte Düsenscheibe (10) mit unterhalb der Düsen (19) radial angeordneten Wegbegrenzern (22) für die Membran (14) versehen ist.

12. Trennwand für ein Hydrolager nach einem der Ansprüche 1 bis 11, **dadurch gekennzeichnet, dass** wenigstens eine der Düsenscheiben (9, 10) aus Kunststoff besteht.

13. Trennwand für ein Hydrolager nach einem der Ansprüche 1 bis 12, **dadurch gekennzeichnet, dass** die Düsenscheiben (9, 10) ringförmig ausgebildet sind.

14. Trennwand für ein Hydrolager nach einem der Ansprüche 1 bis 13, **dadurch gekennzeichnet, dass** die Membran (14) ringförmig ausgebildet ist.

15. Trennwand für ein Hydrolager nach einem der Ansprüche 1 bis 14, **dadurch gekennzeichnet, dass** die Trennwand (2) bei einem schaltbaren Hydrolager eingesetzt ist.

## Claims

1. Partition wall (2) for a hydromount (1) having a supporting spring (3) made of an elastomer between a supporting bearing (4) and a support (5), a working chamber (6) and a compensation chamber (7) which are separated from one another by the partition wall (2) made of two rigid nozzle discs (9, 10) with a flexible elastic diaphragm (14) inserted between them, wherein the chambers (6, 7) are hydraulically connected to one another via a damping channel (11), wherein the diaphragm (14) is clamped between the nozzle discs (9, 10) in predetermined regions (16) and is arranged with axial play (27) in regions (17) adjacent to the predetermined clamped regions (16), and wherein the clamped regions (16) sectorally comprise at least the outer periphery and the surfaces (18) of the nozzle discs (9, 10) located between the peripheral sector and the centre (15) of the partition wall (2), **characterised in that** the regions (17) with play (27) are formed by recesses on the inside of the wall of at least one of the nozzle discs (9).

2. Partition wall for a hydromount according to claim 1, **characterised in that** the clamped regions (16) and the regions (17) provided with play (27) are designed as circular sectors.

3. Partition wall for a hydromount according to claim 1 or 2, **characterised in that** the recesses are formed in the nozzle disc (9) facing the working chamber (6).

4. Partition wall for a hydromount according to claim 3, **characterised in that** two regions (17) are present which are radially opposite one another and have play (27).

5. Partition wall for a hydromount according to claim 4, **characterised in that** the areas (17) with play (27) comprise a sector angle (α) of 50° to 90°.

6. Partition wall for a hydromount according to one of claims 1 to 5, **characterised in that** the clamping of the diaphragm (14) in the clamped regions (16) has a ratio of 1 : 5 to 1 : 7 to the diaphragm thickness (D).

7. Partition wall for a hydromount according to one of claims 1 to 6, **characterised in that** the play (27) of the membrane (14) in the regions (17) with play (27) has a ratio of 1 : 12 to 1 : 3 to the membrane thickness (D).

8. Partition wall for a hydromount according to one of claims 1 to 7, **characterised in that** the nozzles (19) in the nozzle discs (9, 10) are in alignment with one another.

9. Partition wall for a hydromount according to one of claims 1 to 8, **characterised in that** the damping channel (11) is arranged in the outer periphery of the partition wall (2).

10. Partition wall for a hydromount according to one of claims 1 to 9, **characterised in that** six nozzles (19) are arranged on the circumference of the partition wall (2) in a uniformly distributed manner.

11. Partition wall for a hydromount according to claim 10, **characterised in that** the nozzle disc (10) facing the compensation chamber (7) is provided with travel limiters (22) for the diaphragm (14) arranged radially below the nozzles (19).

12. Partition wall for a hydromount according to one of claims 1 to 11, **characterised in that** at least one of the nozzle discs (9, 10) consists of plastic.

13. Partition wall for a hydromount according to one of claims 1 to 12, **characterised in that** the nozzle discs (9, 10) are of annular design.

14. Partition wall for a hydromount according to one of claims 1 to 13, **characterised in that** the diaphragm (14) is of annular design.

15. Partition wall for a hydromount according to one of claims 1 to 14, **characterised in that** the partition wall (2) is used in a switchable hydromount.

## Revendications

1. Cloison de séparation (2) pour un support hydraulique (1) comportant un ressort porteur (3) en élastomère entre un support porteur (4) et un appui (5), une chambre de travail (6) et une chambre de compensation (7) qui sont séparées l'une de l'autre par la cloison de séparation (2) constituée de deux plaques à buses rigides (9, 10) avec une membrane élastique souple (14) interposée entre ces dernières, les chambres (6, 7) étant reliées hydrauliquement l'une à l'autre par un canal d'amortissement (11), la membrane (14) étant serrée entre les plaques à buses (9, 10) dans des zones données (16) et étant agencée avec un jeu axial (27) dans des zones (17) voisines des zones serrées données (16), et les zones serrées (16) comprenant sectoriellement au moins le bord extérieur et les surfaces (18) des plaques à buses (9, 10) qui se situent entre le secteur de bord et le centre (15) de la cloison de séparation (2),
**caractérisée en ce que**
les zones (17) ayant un jeu (27) sont formées par des évidements sur la face intérieure de la cloison de l'une au moins des plaques à buses (9).

2. Cloison de séparation pour un support hydraulique selon la revendication 1,
**caractérisée en ce que**
les zones serrées (16) et les zones (17) pourvues d'un jeu (27) sont conçues sous forme de secteurs de cercle.

3. Cloison de séparation pour un support hydraulique selon la revendication 1 ou 2,
**caractérisée en ce que**
les évidements sont ménagés dans la plaque à buses (9) tournée vers la chambre de travail (6).

4. Cloison de séparation pour un support hydraulique selon la revendication 3,
**caractérisée en ce que**
il existe deux zones radialement opposées (17) ayant un jeu (27).

5. Cloison de séparation pour un support hydraulique selon la revendication 4,
**caractérisée en ce que**
les zones (17) ayant un jeu (27) définissent un angle de secteur (α) de 50° à 90°.

6. Cloison de séparation pour un support hydraulique selon l'une des revendications 1 à 5,
**caractérisée en ce que**
le serrage de la membrane (14) dans les zones serrées (16) par rapport à l'épaisseur de membrane (D) est dans un rapport de 1 sur 5 à 1 sur 7.

7. Cloison de séparation pour un support hydraulique selon l'une des revendications 1 à 6,
**caractérisée en ce que**
le jeu (27) de la membrane (14) dans les zones (17) ayant un jeu (27) par rapport à l'épaisseur de membrane (D) est dans un rapport de 1 sur 12 à 1 sur 3.

8. Cloison de séparation pour un support hydraulique selon l'une des revendications 1 à 7,
**caractérisée en ce que**
les buses (19) dans les plaques à buses (9, 10) sont orientées en alignement mutuel.

9. Cloison de séparation pour un support hydraulique selon l'une des revendications 1 à 8,
**caractérisée en ce que**
le canal d'amortissement (11) est agencé dans le bord extérieur de la cloison de séparation (2).

10. Cloison de séparation pour un support hydraulique selon l'une des revendications 1 à 9,
**caractérisée en ce que**
six buses (19) sont montées en étant réparties régulièrement sur la périphérie de la cloison de séparation (2).

11. Cloison de séparation pour un support hydraulique selon la revendication 10,
**caractérisée en ce que**
la plaque à buses (10) tournée vers la chambre de compensation (7) est pourvue de limiteurs de course (22), agencés radialement au-dessous des buses (19), pour la membrane (14).

12. Cloison de séparation pour un support hydraulique selon l'une des revendications 1 à 11,
**caractérisée en ce que**
l'une au moins des plaques à buses (9, 10) est constituée en matière plastique.

13. Cloison de séparation pour un support hydraulique selon l'une des revendications 1 à 12,
**caractérisée en ce que**
les plaques à buses (9, 10) sont réalisées en forme d'anneau.

14. Cloison de séparation pour un support hydraulique selon l'une des revendications 1 à 13,
**caractérisée en ce que**
la membrane (14) est réalisée en forme d'anneau.

15. Cloison de séparation pour un support hydraulique selon l'une des revendications 1 à 14,
**caractérisée en ce que**
la cloison de séparation (2) est utilisée dans un support hydraulique commutable.
